# EUROPÄISCHE PATENTSCHRIFT

(11) **EP 2 118 602 B1**
(45) Veröffentlichungstag und Bekanntmachung des Hinweises auf die Patenterteilung: **31.08.2016**
(21) Anmeldenummer: 07856746.8
(22) Anmeldetag: 14.12.2007
(51) Int. Cl.: F26B 1/00, F26B 17/10, F26B 21/04, F26B 21/06

(54) **VERFAHREN UND ANLAGE ZUR TROCKNUNG VON STAUBFÖRMIGEN, INSBESONDERE EINER VERGASUNG ZUZUFÜHRENDEN BRENNSTOFFEN**
METHOD AND SYSTEM FOR DRYING FUELS IN THE FORM OF DUST, PARTICULARLY TO BE FED TO A GASIFICATION PROCESS
PROCÉDÉ ET DISPOSITIF POUR SÉCHER DES COMBUSTIBLES PULVÉRULENTS, DESTINÉS EN PARTICULIER À ÊTRE SOUMIS À UNE GAZÉIFICATION

(30) Priorität: 06.02.2007 DE 102007005782
(43) Veröffentlichungstag der Anmeldung: 18.11.2009
(73) Patentinhaber: ThyssenKrupp Industrial Solutions AG, 45143 Essen (DE)
(72) Erfinder: KOWOLL, Johannes, 44799 Bochum (DE); KUSKE, Eberhard, 59494 Soest (DE)
(74) Vertreter: Kutzenberger, Helga
(86) Internationale Anmeldenummer: PCT/EP2007/011008
(87) Internationale Veröffentlichungsnummer: WO 2008/095524

(56) Entgegenhaltungen:
- EP-A- 1 306 134
- EP-B- 1 004 000
- DE-A1- 4 319 828
- DE-A1- 4 326 468
- DE-C- 69 497
- DE-C- 947 922
- US-A- 3 854 666

## Beschreibung

Die Erfindung richtet sich auf ein Verfahren und eine Anlage zur Trocknung von staubförmigen, insbesondere einer Vergasung zuzuführenden Brennstoffen, wie Kohle, Petrolkoks, biologischen Abfällen od. dgl., der im Oberbegriff des ersten Verfahrensanspruches bzw. des ersten Anlagenanspruches angegebenen Gattung.

Gegenstand der DE 947 922 C ist ein Verfahren zum Betreiben einer Kohlenstaubfeuerung mit Mahltrocknung und Kreislauf der Trägergase nach Patent 919 254, dadurch gekennzeichnet, dass die entstaubten Brüden unter den Taupunkt abgekühlt werden, das Kondensat ausgeschieden und abgeleitet wird, während der Rest der Gase erhitzt und im Kreislauf in die Mühle zurückgeführt wird. Ferner betrifft die DE 947 922 C eine Anordnung zum Durchführen des Verfahrens, gekennzeichnet durch das Aneinanderreihen folgender Einzelteile: einer Mühle mit Sichter, einem Vorabscheider, einem Feinentstauber, einem Umwälzgebläse, einem Kondensator und einem Erhitzer, welche nacheinander von dem Gasstrom durchströmt werden, und einer Leitung zur Rückführung der erhitzten Gase zur Mühle sowie einer Vorrichtung zur Ableitung des Kondenswassers.

Derartige Verfahren bzw. Anlagen sind in unterschiedlichen Ausführungsformen und Gestaltungen bekannt. So beschreibt beispielsweise die US-4 750 434 eine Erwärmung und Trocknung von einer Mühle zugeführten Staubpartikeln. Wie etwa Braunkohle zerkleinert und getrocknet wird, beschreiben die EP-0 203 059-A1, DE-37 24 960-A1 bzw. DE-39 43 366-A1, um nur einige Beispiele zu nennen. Weitere Trocknungsverfahren beschreiben die DE 43 19 828 A1, die DE 43 26 468 A1, EP 1 004 000 B1, EP 1 306 134 A2 oder auch US 3 854 666.

Bekannt ist dabei, dass der getrocknete Staub von einem Staubfilter, z.B. Tuchfilter, von den Abgasen getrennt wird. Ein Teil des Abgases wird dabei in die Atmosphäre freigesetzt, wobei es auch bekannt ist, einen Teil der heißen Abgase mit Luft und Inertgasen zu vermischen und der Mahlanlage wieder zuzuführen. Die Menge an frisch zugeführten Gasen wird üblicherweise so gewählt, dass der Sauerstoffanteil abhängig von der Brennstoffart unterhalb von 6 bis 10 Vol.-% und der Taupunkt des aus der Mühle ausströmenden Gases unterhalb von 65°C liegt. Die resultierende Menge des Inertgases beträgt beispielsweise 4000 m³ und des freigesetzten feuchten Abgases ca. 10000 m³ pro Einheit t des verdampften Wassers.

Die Temperatur des in die Mühle einströmenden Gases liegt im Bereich von 150 bis 450°C und ein Teil der gemahlenen Partikel erreicht nahezu die Gastemperatur. Bereits unterhalb von 200°C fängt dabei die Kohleentgasung an, wobei zuerst CH₄, C₂H₆ und CO austreten. Beim Mahlen und Erwärmen des Petrolkokses und von gerösteten biologischen Brennstoffen können mehrere Schadstoffe entstehen, z.B. zyklische Kohlenwasserstoffe, so dass bei diesen alternativen Brennstoffen Emissionsgrenzen für Kohlenwasserstoffe und für einige Einzelsubstanzen überschritten werden können. Die Entfernung derartiger Schadstoffe aus sehr großen Abgasströmen, z.B. 200000 m³/h bei 100 t/h Kohle mit 20 % Feuchte, wäre aufwändig und somit auch unwirtschaftlich. Nachteilig ist dabei auch, dass beispielsweise für die Trocknung von Braunkohle, die oft über 50 % Feuchte enthält, mit Heißgasen bei Gastemperaturen zwischen 350 und 1000°C flüchtige Bestandteile gebildet werden, die nicht mehr in die Atmosphäre freigesetzt werden können.

In den oben erwähnten Literaturstellen sind zum Teil Hinweise, zerkleinerte Kohle in einer Wirbelschicht mit einem Wärmetauscher zu erwärmen, wobei ein Teil des aus der Wirbelschicht ausströmenden Gases nahezu aus reinem Dampf besteht und dabei auf 3 bis 5 bar verdichtet wird, um die Temperatur anzuheben, womit das Gas wieder in den in der Wirbelschicht eingetauchten Wärmetauscher eingeleitet werden kann. Dort kondensiert dieser Dampf und gibt seine Kondensationswärme an die Wirbelschicht ab, wobei die Temperatur der Wärmetauscherflächen niedriger als 150°C ist, damit keine Entgasungsprodukte freigesetzt werden. Vor der Förderung in den Flugstromvergaser muss jedoch die Kohle wieder gemahlen werden, so dass insgesamt zwei Mühlen erforderlich sind mit einer aufwändigen Trocknung, so dass derartige Braunkohlemahl- und -trocknungsanlagen deutlich teurer sind als die entsprechende Anlagen bei Steinkohle.

Die vorliegende Erfindung soll daher die oben beschriebenen Nachteile nicht nur vermeiden, sondern ihre Aufgabe besteht insbesondere darin, ein kostengünstiges Mahl- und Trocknungsverfahren und eine entsprechende Anlage vorzuschlagen mit geringen Emissionen und einem niedrigen Inertgasbedarf.

Diese Aufgabe wird gemäß der Erfindung gelöst mit einem Verfahren zur Trocknung von staubförmigen, insbesondere einer Vergasung zuzuführenden Brennstoffen, wie Kohle, Petrolkoks, biologischen Abfällen od. dgl., mit den folgenden Verfahrensschritten:
- der Brennstoff (Pfeil 1) wird in einer Mühle (2) zerkleinert und mittels eines Förder- und Trocknungsgases einem Filter- /Abscheider (3) zugeführt,
- ein Teil des Förder-/Trocknungsgases wird im Kreislauf nach Erwärmung in die Mühle (2) wieder zurückgeführt,
- die Temperatur des Förder-/Trocknungsgasstromes wird vor Eintritt in die Mühle (2) über einen Brenner (17) angehoben, wobei als Verbrennungsmedium ein Gasgemisch CO : H₂ = 1:1 und Sauerstoff eingesetzt wird,
- ein Teil des Förder-/Trocknungsgasstromes wird in einem Sprühturm (6) od. dgl. abgekühlt und entfeuchtet,
- ein Teil des den Sprühturm (6) verlassenden, getrockneten Gases wird der Umgebung und/oder einer Feuerung zugeführt und der andere Teil wird dem Förder-/Trocknungsgasstrom wieder zugeführt.

Erkennbar wird mit der erfindungsgemäßen Verfahrensweise ein Teil des rückgeführten Gases im Sprühturm gekühlt, um die Feuchtigkeit abzusenken und das Kreislaufgas so zur erneuten Aufgabe der Kohlefeuchte zu befähigen. Dabei kann ein Teil des aus dem Sprühturm austretenden Gases z.B. über ein Sorptionsmittel gereinigt in die Umgebung freigesetzt werden oder aber einer Feuerung bzw. einem katalytischen Reaktor zugeleitet werden, um die aus dem Brennstoff stammenden Kohlenwasserstoffe und andere Entgasprodukte zu verbrennen, und die bei der Verbrennung gebildeten Stickoxide zu entfernen.

Ausgestaltungen der erfindungsgemäßen Verfahrensweise ergeben sich aus den das Verfahren betreffenden Unteransprüchen sowie aus den Anlagenansprüchen.

Um beispielsweise Druckverluste der Gasreinigung/-verbrennung bei Austritt aus dem System zu überwinden, kann der Kreislaufdruck angehoben werden, alternativ kann auch, wie dies die Erfindung in Ausgestaltung vorsieht, ein entsprechendes Gebläse zur Druckerhöhung herangezogen werden. Nach der Erfindung ist eine vollständige Entfernung der Schadstoffe aus einem kleinen Abgasstrom mit geringem Aufwand möglich. Auch kann ein verbrauchtes festes Sorptionsmittel, z.B. Aktivkohle, kostenlos dem Brennstoff beigemischt und vergast werden. Bei den hohen Temperaturen der Flugstromvergaser werden dabei alle Schadstoffe vollständig zerstört.

In einer weiteren Ausgestaltung kann der Teil des rückgeführten Gases z.B. in einem ersten Wärmetauscher erwärmt werden, wobei die Temperatur so wählbar ist, dass die Temperatur des Gasstromes im Systemkreislauf nach Vermischung mit dem aus dem Sprühturm stammenden Teilgasstrom über dem Taupunkt liegt, damit die im Sprühturm mitgerissenen Tropfen und nassen Staubpartikel vor dem Eintritt in einen nachgeschalteten Wärmetauscher verdunsten bzw. getrocknet werden.

Bei einem evtl. Ausfall des Kohleeintrags wird das Heißgas in der Mühle kaum gekühlt. Dies würde in kürzester Zeit zur Zerstörung der Filtersäcke führen. Diesem Problem kann man erfindungsgemäß dadurch begegnen, dass der weitere Wärmetauscher mittels Bypass umgangen werden kann. Hier macht man sich den Vorteil zunutze, dass das Umschalten derartiger Gasströme deutlich schneller als die Abkühlung in einem Wärmetauscher erfolgt, so dass die Tuchfilter wirksam vor hohen Temperaturen geschützt sind.

Das kreislaufgeführte Förder-/Trocknungsgas kann erfindungsgemäß durch Verbrennung eines Brennstoffes weiter erhöht werden, da vorliegend deutlich höhere Temperaturen als bei konventionellen Mahlanlagen erreichbar sind, da keine Entgasungsprodukte in die Atmosphäre freigesetzt werden. Durch diese Temperaturerhöhung wird der erforderliche Gasumlauf verringert und damit Investitionskosten der Anlagenelemente des Gasumlaufes gesenkt.

Erfindungsgemäß wird als Verbrennungsmedium wasserstoffreiches Brenngas und Sauerstoff eingesetzt, was wiederum zur Reduzierung des Abgasstromes führt.

In einer weiteren Ausgestaltung kann erfindungsgemäß vorgesehen sein, vor Anfahren der Mahlanlage bei ausgeschaltetem Brenner den Sauerstoffgehalt im Kreislauf mit Inertgas zu senken, wobei der Begriff Intergas hier N₂, Edelgase, CO₂ umfasst, nicht jedoch Wasserdampf. Der Inertgasbedarf ist erfindungsgemäß dabei äußerst gering, selbst dann, wenn sauerstofffreies Gas beim Mahlen und Trocknen einer hochreaktiven Braunkohle, die schon bei Temperaturen oberhalb von 40°C zünden kann, angestrebt wird.

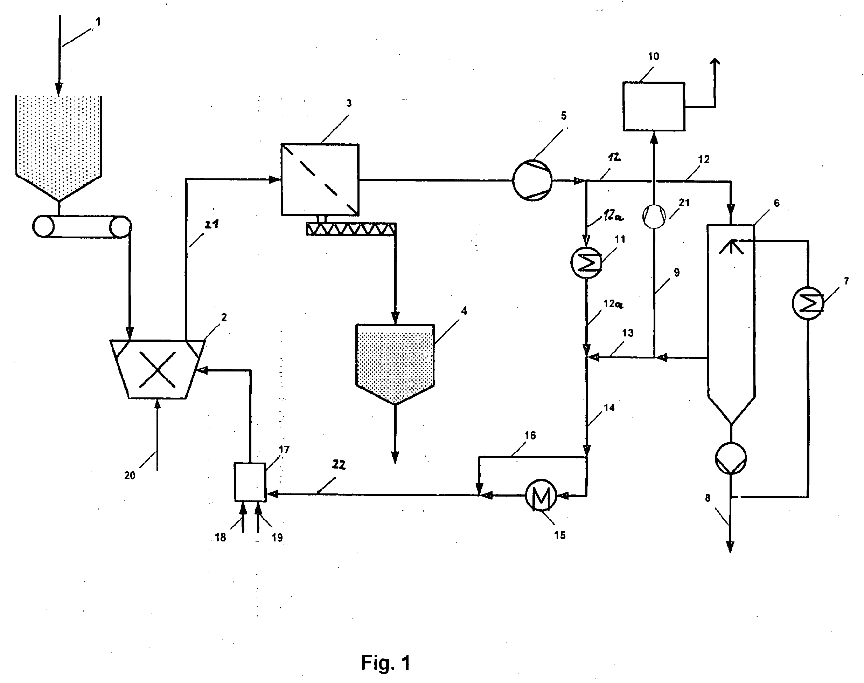

Weitere Merkmale, Einzelheiten und Vorteile der Erfindung ergeben sich aufgrund der nachfolgenden Beschreibung sowie anhand der Zeichnung. Diese zeigt in der einzigen Figur ein Anlageschaltbild nach der Erfindung.

Bei der in der Figur dargestellten Anlage wird gemäß Pfeil 1 ein Brennstoff, z.B. Braunkohle, dem System zugeführt und mittels entsprechender Fördereinrichtung in die Mühle 2 aufgegeben. Die Mühle 2 dient gleichzeitig der Zerkleinerung, Trocknung und Sichtung, wobei der dabei entstehende Feinstaub < 0,5 mm bei 60 bis 120°C pneumatisch ausgetragen und über die Leitung 21 einem Filter 3 zugeführt wird, der den Feststoff trennt und einem Behälter 4 aufgibt, so dass der zerkleinerte und getrocknete Brennstoff weiteren Verfahren zuführbar ist.

Zur Förderung des Förder-/Trockengases im Kreislauf ist ein Gebläse 5 vorgesehen, mit dem das gereinigte Gas weitergefördert wird, wobei ein Teilstrom über eine mit 12 bezeichnete Leitung zur Kühlung einem Sprühturm 6 zugeführt wird und ein weiterer Teilstrom über einen Wärmetauscher 11 zur Erhitzung und über die Leitung 12a weitergeführt wird. Dabei werden mindestens 15 % der das Gebläse 5 verlassenden Mengen in den Wärmetauscher 11 geleitet.

Der Gasanteil zum Wärmetauscher 11 hängt vorwiegend von der Gastemperatur vor der Mühle ab. Wird eine hohe Gastemperatur mit Brenner 17 eingestellt, ist geringe Gasmenge im Kreislauf erforderlich, der Gasstrom 12a entfällt (d.h. 100 % zum Sprühturm 6). Wird dagegen bei Trocknung der alternativen Brennstoffe kein Brenner 17 vorgesehen und im Wärmetauscher 15 nur eine niedrige Temperatur (z.B. 200° C) erreicht, wird das meiste Gas durch die Leitung 12a umgewälzt und nur ein kleiner Teil, z.B. 15 %, im Sprühturm 6 getrocknet. Vorteil: Kein CO₂ aus Verbrennung und wenig CO₂ im 9, daher z.B. Aktivkohle einsetzbar, um Schadstoffe, z.B. chlorierte Kohlenwasserstoffe, zu entfernen.

Das im Sprühturm entstehende Kondensat wird zu einem großen Teil ebenfalls im Kreislauf geführt, und zwar über einen kühlenden Wärmetauscher 7, ein Teilstrom des Kondensates, gebildet aus dem Überschuss, wird über eine Leitung 8 aus dem System entnommen.

An dieser Stelle sei bemerkt, dass der Wärmetauscher 7 als integraler Bestandteil des Sprühturmes 6 ausgebildet sein kann. Ein Teil des im Sprühturm 6 gekühlten Förder-/Trocknungsgasstromes kann über die Leitung 9 und ggf. über ein Gebläse 21 aus dem System entfernt werden und beispielsweise, wie dargestellt, einer Gasreinigung 10, z.B. einem Sorptionsmittel, gereinigt in die Umwelt abgegeben werden oder einer Feuerung zugeführt werden, um die noch enthaltenen Schadstoffe zu verbrennen. Der wesentliche Teil wird über die Leitung 13 dem Kreislaufsystem zur Trocknung wieder zugeführt.

Der im Kreislauf geführte Teilstrom über einen erhitzenden Wärmetauscher 11 in der Leitung 12a und der über den Sprühturm gekühlte Teilstrom 13 werden vereinigt und über die Leitung 14 einem weiteren, der Erhitzung dienenden Wärmetauscher 15 aufgegeben. Danach wird der Gesamtstrom über die Leitung 22 zur Temperaturerhöhung über einen Brenner 17 geführt und von dort erhitzt in die Mühle 2. Die dem Brenner 17 zugeordneten Brennstoff- und Sauerstoffzuführungen sind mit 18 und 19 bezeichnet, während der Pfeil 20 zur Mühle 2 eine Inertgaszuführung andeutet.

Wie aus der Anlageschaltung ebenfalls ersichtlich ist, kann der Wärmetauscher 15 insbesondere zur Temperaturregelung des gesamten umgewälzten Gasvolumens über einen Bypass 16 umgangen werden, wobei dieser Bypass 16 auch integraler baulicher Bestandteil des Wärmetauschers 15 sein kann.

Nachfolgend ist anhand eines Beispieles die Funktionsweise der vorliegenden Erfindung beschrieben:

Die gelieferte Kohle 1, z.B. 50 kg/s, soll von 30 wt% bis auf 3 wt% getrocknet werden. 14 kg/s Feuchte müssen verdampft werden, wofür 36 MW benötigt werden. Nach Berücksichtigung anderer Wärmesenken und der zugeführten Mahlenergie beträgt der Wärmebedarf ca. 40 MW. Die Temperatur des umgewälzten Gases beträgt 460°C vor der Mühle 2 und 105°C danach. Bei der spezifischen Wärmekapazität des Gases von 40 kJ/kmol/K sind im Eintritt der Mühle 2 2.8 kmol/s erforderlich, um den Wärmebedarf zu decken. Im Filter 3 werden 36 kg/s der getrockneten Kohle abgeschieden. 80% des im Filter 3 entstaubten Gases werden zum Sprühturm 6 geleitet.

Bei Abkühlung bis auf 45°C wird die Feuchte des Gases von 35 Vol.% auf 10 Vol.% verringert und 14 kg/s Wasser kondensieren aus. Zur Gasreinigung 10 und Freisetzung in die Atmosphäre werden 0.09 kmol/s (2.5 m3/s) des entfeuchteten Gases abgespalten. Das den Wärmetauscher 11 durchströmende Gas wird bis auf 180°C erwärmt. Die Temperatur des Gemisches (Leitung 14) beträgt 80°C und der Taupunkt 60°C, so dass die aus dem Sprühturm 6 mitgerissenen Wasserstropfen vor dem Wärmetauscher 15 verdunsten. In diesem Wärmetauscher 15 wird das Gas bis auf 234°C erwärmt. Der Brenner 17 wird mit einer Gasmischung CO : H₂ = 1 : 1 und mit Sauerstoff (95 % O₂) (Pfeile 18, 19) versorgt. Um die Abgastemperatur von 460°C zu erreichen, werden 25 MW (Hu) verbraucht.

Neben oben beschriebenen Anlageverschaltungen können auch Alternativen erfindungsgemäß vorgesehen sein, u.a. die folgenden:
- wie oben, aber ohne Brennstoffverbrennung 17, sinnvoll bei geringer Verdampfung in der Mühle und bei einer Reinigung 10 mit Aktivkohle, die durch CO₂ aus Verbrennung deaktiviert wird,
- wie oben, aber ohne Erwärmung 11 des Sprühturm-Bypassstromes, sinnvoll bei 12 > 13, d.h. bei geringer Verdampfung in der Mühle,
- ohne 11, 15, 16 - niedrigere Investitionskosten, aber mehr Freisetzung in die Atmosphäre 9, 10 größer, höherer Brennstoffverbrauch 18, aber kein Dampf erforderlich,
- Kühler 8 integriert im Sprühturm 6,
- Kühlturm in Form eines Wärmetauschers, dessen Oberfläche mit zirkulierendem Kondensat besprüht/benetzt wird,
- dem Sprühturm wird ein Kondensatabscheider mit Tropfenabscheider nachgeschaltet,
- Gebläse 21 anstatt Erhöhung des Druckniveaus des Gaskreislaufes,
- Wassereinspritzung anstatt Bypass 16,
- Wasserkreislauf über einen externen Kühlturm, z.B. Kraftwerkskühlturm anstatt Kühler 7,
- Wärme aus dem Wärmetauscher 7 wird genutzt, z.B. für Erwärmung des kalten Wassers,
- abhängig von der Abwasserzusammensetzung wird das Abwasser behandelt, z.B. biologisch oder durch Oxidation, direkt in einem Kühlturm oder einer Wasseraufbereitungsanlage zugeführt,
- mehrere nacheinander geschaltete Sprühtürme, um im Gas 12 in geringer Konzentration befindliche Partikel besser abzuscheiden und Ablagerungen im Wärmetauscher 15 zu vermeiden.

## Patentansprüche

1. Verfahren zur Trocknung von staubförmigen, insbesondere einer Vergasung zuzuführenden Brennstoffen, wie Kohle, Petrolkoks, biologischen Abfällen od. dgl., mit den folgenden Verfahrensschritten:
- der Brennstoff (Pfeil 1) wird in einer Mühle (2) zerkleinert und mittels eines Förder-und Trocknungsgases einem Filter- /Abscheider (3) zugeführt,
- ein Teil des Förder-/Trocknungsgases wird im Kreislauf nach Erwärmung in die Mühle (2) wieder zurückgeführt,
- die Temperatur des Förder-/Trocknungsgasstromes wird vor Eintritt in die Mühle (2) über einen Brenner (17) angehoben, wobei als Verbrennungsmedium ein Gasgemisch CO : H₂ = 1:1 und Sauerstoff eingesetzt wird,
- ein Teil des Förder-/Trocknungsgasstromes wird in einem Sprühturm (6) od. dgl. abgekühlt und entfeuchtet,
- ein Teil des den Sprühturm (6) verlassenden, getrockneten Gases wird der Umgebung und/oder einer Feuerung zugeführt und der andere Teil wird dem Förder-/Trocknungsgasstrom wieder zugeführt.

2. Verfahren nach Anspruch 1, **dadurch gekennzeichnet, dass** der aus dem System ausgeleitete Gasstrom einer Sorption (Kohlenwasserstoffe außer CH₄, CO₂) einer (katalytischen) Verbrennung oder einer katalytischen Umwandlung (NOₓ, chlorierte Kohlenwasserstoffe) unterworfen wird.

3. Verfahren nach Anspruch 1 oder 2, **dadurch gekennzeichnet, dass** der Förder-/Trocknungsgasstrom hinter der Zumischung des getrockneten Teilgasstromes aus der Sprühturmkühlung einem Wärmetauscher (15) zugeführt wird.

4. Verfahren nach Anspruch 3, **dadurch gekennzeichnet, dass** zur Temperatursteuerung des Förder-/Trocknungsgasstromes wenigstens ein Teilstrom über einen Bypass (16) um den Wärmetauscher (15) leitbar ist.

5. Verfahren nach einem der vorangehenden Ansprüche, **dadurch gekennzeichnet, dass** ein Teilstrom des im Sprühturm (6) anfallenden Kondensats über einen kühlenden Wärmetauscher (7) im Kreislauf geführt wird.

6. Verfahren nach einem der vorangehenden Ansprüche, **dadurch gekennzeichnet, dass** dem Strom des Gases zur Abgabe an die Umwelt oder an eine Feuerung eine Reinigungs- und/oder Druckerhöhungseinrichtung vorgesehen ist.

7. Verfahren nach einem der vorangehenden Ansprüche, **dadurch gekennzeichnet, dass** insbesondere beim Anfahren dem Kreislauf ein Inertgas, wie N₂, Edelgase, CO₂ od. dgl., zugeführt wird.

8. Verfahren nach einem der vorangehenden Ansprüche, **dadurch gekennzeichnet, dass** der Trocknung z.B. über den Sprühturm (6) mindestens 15 % des Gasstromes (21) aus der Mühle (2) zugeführt wird.

9. Vorrichtung zur Trocknung von staubförmigen Brennstoffen, wie Kohle, Petrolkoks, biologischen Abfällen od. dgl., zur Durchführung des Verfahrens nach einem der vorangehenden Ansprüche, **gekennzeichnet durch** wenigstens folgende Elemente:
- einer Brennstoff-Zerkleinerungsmühle (2) mit einer Förder-/ Trocknungsgasleitung (21) zu einem Feststoffabscheider (3),
- mit einer Rückführleitung (22) des Förder-/Trocknungsgasstromes zu der Brennstoffmühle (2),
- mit einer Förder-/Trocknungsgas-Bypassleitung (12) mit einem als Sprühturm ausgebildeten Gaskühler (6)
- mit einem mit einer Gasmischung CO : H₂ = 1:1 Wasserstoff reichem Brenngas und mit Sauerstoff betriebenen Heizungsbrenner (17) vor der Mühle (2) im Förder-/Trocknungsgasstrom und
- mit wenigstens einem der Erhitzung des Förder-/Trocknungsgasstrom dienenden Wärmetauscher (11, 15).

10. Vorrichtung nach Anspruch 9, **dadurch gekennzeichnet, dass** der Sprühturm einen Kondensatkreislauf aufweist, in welchem zur Kühlung des Kondensates ein Wärmetauscher (7) vorgesehen ist.

11. Vorrichtung nach Anspruch 10, **gekennzeichnet durch** eine Förder-/Trocknungsgasrückführleitung (13) eines Teiles des Gases aus dem Sprühturm (6) in die Förder-/Trocknungsgas-Kreislaufleitung (14, 22) zur Mühle (2) und eine Leitung (9) zur Förderung eines Teilstromes aus der Anlage, insbesondere zu einer Reinigungs-oder Verbrennungsstufe (10).

12. Vorrichtung nach Anspruch 9 oder einem der folgenden, **dadurch gekennzeichnet, dass** ein der Erhitzung dienender Wärmetauscher (11) vor der Zusammenführung des im Kreislauf geführten Förder-/Trocknungsgasstromes mit dem den Sprühturm (6) verlassenden Gasstrom und ein Wärmetauscher (15) hinter der Zusammenführung vorgesehen ist.

13. Vorrichtung nach Anspruch 9 oder einem der folgenden, **dadurch gekennzeichnet, dass** der Wärmetauscher (15) zur Erhitzung des Gesamtförder- /Trocknungsgasstromes mit einem Bypass (16) für wenigstens einen Teilstrom zur Temperaturregulierung versehen ist.

14. Vorrichtung nach Anspruch 11, **dadurch gekennzeichnet, dass** in der aus dem System führenden Leitung (9) ein Druckerhöhungsgebläse (21) vorgesehen ist, oder Vorrichtung nach einem der Ansprüche 9, 10, 12, 13, **dadurch gekennzeichnet, dass** eine aus dem System führenden Leitung (9) vorgeschen ist, in welcher ein Druck - erhöhungsgebläse vorgesehen ist.

15. Vorrichtung nach Anspruch 9 oder einem der folgenden, **dadurch gekennzeichnet, dass** im Bereich der Mühle (2) eine Inertgaszuführung (20) vorgesehen ist.

16. Vorrichtung nach Anspruch 13 oder nach Anspruch 14 oder 15 sofern diese von Anspruch 13 abhängig sind, **dadurch gekennzeichnet, dass** der Bypass (16) in dem Wärmetauscher (15) integriert ist.

17. Vorrichtung nach Anspruch 10 oder einem der folgenden Anspruche sofern diese von Anspruch 10 abhängig sind, **dadurch gekennzeichnet, dass** der Wärmetauscher (7) für das Kondensat im Sprühturm (6) integriert ist.

## Claims

1. Method for drying fuels in the form of dust, particularly to be fed to a gasification process, such as coal, petroleum coke, forms of biological waste or the like, with the following method steps:
- the fuel (arrow 1) is crushed in a mill (2) and fed to a filter/separator (3) by means of a transporting and drying gas,
- a part of the transporting/drying gas is recirculated back into the mill (2) after heating,
- the temperature of the transporting/drying gas stream is raised by a burner (17) before entry into the mill (2), a gas mixture of CO: H₂ = 1:1 and oxygen being used as the combustion medium,
- a part of the transporting/drying gas stream is cooled and dehumidified in a spray tower (6) or the like,
- a part of the dried gas leaving the spray tower (6) is let out into the environment and/or fed to a firing system, and the other part is returned to the transporting/drying gas stream.

2. Method according to Claim 1, **characterized in that** the gas stream taken out of the system is subjected to sorption (hydrocarbons other than CH₄, CO₂), (catalytic) combustion or catalytic conversion (NOₓ, chlorinated hydrocarbons).

3. Method according to Claim 1 or 2, **characterized in that**, after the dried gas substream from the spray tower cooling has been mixed in, the transporting/drying gas stream is fed to a heat exchanger (15).

4. Method according to Claim 3, **characterized in that**, to control the temperature of the transporting/drying gas stream, at least a substream can be conducted around the heat exchanger (15) by way of a bypass (16).

5. Method according to one of the preceding claims, **characterized in that** a substream of the condensate occurring in the spray tower (6) is circulated by way of a cooling heat exchanger (7).

6. Method according to one of the preceding claims, **characterized in that** a cleaning and/or pressure-increasing device is provided for the stream of gas for discharge to the environment or to a firing system.

7. Method according to one of the preceding claims, **characterized in that**, particularly when starting up, an inert gas, such as N₂, noble gases, CO₂ or the like, is fed into the circulation.

8. Method according to one of the preceding claims, **characterized in that** at least 15% of the gas stream (21) from the mill (2) is fed to the drying, for example by way of the spray tower (6).

9. Device for drying fuels in the form of dust, such as coal, petroleum coke, forms of biological waste or the like, for carrying out the method according to one of the preceding claims, **characterized by** at least the following elements:
- a fuel crushing mill (2) with a transporting/drying gas line (21) to a solids separator (3),
- with a return line (22) of the transporting/drying gas stream to the fuel mill (2),
- with a transporting/drying gas bypass line (12) with a gas cooler (6) formed as a spray tower,
- with a heating burner (17) operated with a gas mixture of CO: H₂ = 1:1, hydrogen-rich fuel gas and oxygen upstream of the mill (2) in the transporting/drying gas stream and
- with at least one heat exchanger (11, 15) serving for heating the transporting/drying gas stream.

10. Device according to Claim 9, **characterized in that** the spray tower has a condensate circulation, in which a heat exchanger (7) is provided for cooling the condensate.

11. Device according to Claim 10, **characterized by** a transporting/drying gas return line (13) for a part of the gas from the spray tower (6) into the transporting/drying gas circulation line (14, 22) to the mill (2) and a line (9) for transporting a substream from the system, in particular to a cleaning and/or combustion stage (10).

12. Device according to Claim 9 or one of the claims thereafter, **characterized in that** a heat exchanger (11) serving for the heating is provided upstream of where the circulated transporting/drying gas stream is combined with the gas stream leaving the spray tower (6) and a heat exchanger (15) is provided downstream of where they are combined.

13. Device according to Claim 9 or one of the claims thereafter, **characterized in that** the heat exchanger (15) for heating the entire transporting/drying gas stream is provided with a bypass (16) for at least a substream for temperature control.

14. Device according to Claim 11, **characterized in that** a pressure-increasing blower (21) is provided in the line (9) leading out of the system, or device according to one of Claims 9, 10, 12, 13, **characterized in that** a line (9) leading out of the system and provided with a pressure-increasing blower is provided.

15. Device according to Claim 9 or one of the claims thereafter, **characterized in that** an inert gas feed (20) is provided in the region of the mill (2).

16. Device according to Claim 13 or according to Claim 14 or 15 as long as the latter are dependent on Claim 13, **characterized in that** the bypass (16) is integrated in the heat exchanger (15).

17. Device according to Claim 10 or one of the claims thereafter as long as the latter are dependent on Claim 10, **characterized in that** the heat exchanger (7) for the condensate is integrated in the spray tower (6).

## Revendications

1. Procédé de séchage de combustibles pulvérulents, notamment destinés à être envoyés à une gazéification, comme du charbon, du coke de pétrole, des déchets biologiques ou similaires, le procédé présentant les étapes suivantes :
le combustible (flèche 1) est broyé dans un moulin (2) et est amené à un filtre/séparateur (3) au moyen d'un gaz de transport et de séchage,
une partie du gaz de transport / de séchage est renvoyée en circuit fermé dans le moulin (2) après avoir été chauffée,
la température de l'écoulement de gaz de transport / de séchage est relevée dans un brûleur (17) avant d'entrer dans le moulin (2), un mélange gazeux de CO : H₂ = 1:1 et d'oxygène étant utilisé comme milieu de combustion,
une partie de l'écoulement de gaz de transport / de séchage est refroidie et déshumidifiée dans une tour de pulvérisation (6) ou similaire, et
une partie du gaz séché qui quitte la tour de pulvérisation (6) est amenée à l'environnement et/ou à une combustion et l'autre partie est renvoyée dans l'écoulement gaz de transport / de séchage.

2. Procédé selon la revendication 1, **caractérisé en ce que** l'écoulement de gaz extrait du système subit une sorption (hydrocarbures autres que CH₄, CO₂), une combustion (catalytique) ou une conversion catalytique (NOₓ, hydrocarbures chlorés).

3. Procédé selon les revendications 1 ou 2, **caractérisé en ce que** l'écoulement de gaz de transport / de séchage est amené à un échangeur de chaleur (15) en aval de l'addition de l'écoulement partiel de gaz séché provenant de la tour de pulvérisation.

4. Procédé selon la revendication 3, **caractérisé en ce que** pour contrôler la température de l'écoulement de gaz de transport / de séchage, au moins une partie de l'écoulement peut contourner l'échangeur de chaleur (15) par l'intermédiaire d'une dérivation (16).

5. Procédé selon l'une des revendications précédentes, **caractérisé en ce qu'**une partie de l'écoulement de condensat produit dans la tour de pulvérisation (6) est recirculée par l'intermédiaire d'un échangeur de chaleur (7).

6. Procédé selon l'une des revendications précédentes, **caractérisé en ce qu'**un dispositif d'épuration et/ou de relèvement de la pression est prévu pour l'écoulement de gaz envoyé dans l'environnement ou à une combustion.

7. Procédé selon l'une des revendications précédentes, **caractérisé en ce qu'**en particulier lors du démarrage, un gaz inerte comme du N₂, des gaz rares, du CO₂ ou similaires sont injectés dans le circuit.

8. Procédé selon l'une des revendications précédentes, **caractérisé en ce qu'**au moins 15 % de l'écoulement de gaz (21) provenant du moulin (2) sont envoyés au séchage par exemple par l'intermédiaire de la tour de pulvérisation (6).

9. Ensemble de séchage de combustibles pulvérulents, comme du charbon, du coke de pétrole, des déchets biologiques ou similaires, en vue de la mise en oeuvre du procédé selon l'une des revendications précédentes, caractérisé au moins par les éléments suivantes :
un moulin (2) de broyage de combustible doté d'un conduit (21) de gaz de transport / de séchage conduisant vers un séparateur de solides (3),
un conduit (22) de recirculation de l'écoulement de gaz de transport / de séchage vers le moulin (2) de broyage de combustible,
un conduit (12) de dérivation du gaz de transport / de séchage doté d'un refroidisseur de gaz (6) configuré comme tour de pulvérisation,
un brûleur de chauffage (17) alimenté en un mélange de gaz CO : H₂ = 1:1, un gaz de combustion riche en hydrogène, et en oxygène, disposé en amont du moulin (2) dans l'écoulement de gaz de transport / de séchage et
au moins un échangeur de chaleur (11, 15) servant à chauffer l'écoulement de gaz de transport / de séchage.

10. Ensemble selon la revendication 9, **caractérisé en ce que** la tour de pulvérisation présente un circuit de condensat dans lequel un échangeur de chaleur (7) est prévu pour refroidir le condensat.

11. Ensemble selon la revendication 10, **caractérisé par** un conduit (13) qui renvoie une partie du gaz de transport / de séchage sortant de la tour de pulvéristaion (6) dans le conduit (14, 22) de circulation du gaz de transport / de séchage vers le moulin (2) et par un conduit (9) qui transporte une partie de l'écoulement hors de l'installation, notamment vers un étage (10) d'épuration ou de combustion.

12. Ensemble selon la revendication 9 ou l'une des revendications suivantes, **caractérisé en ce qu'**un échangeur de chaleur (11) servant au chauffage est prévu en amont de la réunion de l'écoulement de gaz de transport / de séchage en circulation avec l'écoulement de gaz quittant la tour de séchage (6) et **en ce qu'**un échangeur de chaleur (15) est prévu en aval de cette réunion.

13. Ensemble selon la revendication 9 ou l'une des revendications suivantes, **caractérisé en ce que** l'échangeur de chaleur (15) qui chauffe l'ensemble de l'écoulement de gaz de transport / de séchage est doté d'une dérivation (16) pour au moins une partie de l'écoulement en vue de la régulation de la température.

14. Ensemble selon la revendication 11, **caractérisé en ce qu'**une soufflante (21) de relèvement de pression est prévue dans le conduit (9) sortant du système ou ensemble selon l'une des revendications 9, 10, 12, 13, **caractérisé en ce qu'**un conduit (9) sortant du système est prévu, dans lequel est prévue une soufflante de relèvement de pression.

15. Ensemble selon la revendication 9 ou l'une des revendications suivantes, **caractérisé en ce qu'**une amenée (20) de gaz inerte est prévue au niveau du moulin (2).

16. Ensemble selon la revendication 13 ou selon les revendications 14 ou 15 dans la mesure où elles sont subordonnées à la revendication 13, **caractérisé en ce que** la dérivation (16) est intégrée dans l'échangeur de chaleur (15).

17. Ensemble selon la revendication 10 ou l'une des revendications suivantes dans la mesure où elles sont subordonnées à la revendication 10, **caractérisé en ce que** l'échangeur de chaleur (7) prévu pour le condensat est intégré dans la tour de pulvérisation (6).
